# EUROPÄISCHE PATENTANMELDUNG

(11) **EP 0 909 747 A1**
(43) Veröffentlichungstag der Anmeldung: **21.04.1999**
(21) Anmeldenummer: 98119557.1
(22) Anmeldetag: 16.10.1998
(51) Int. Cl.: C04B 41/49

(54) **Verfahren zur Erzeugung einer Selbstreinigungseigenschaft von Oberflächen**

(30) Priorität: 17.10.1997 DE 19746053
(71) Anmelder: ERLUS BAUSTOFFWERKE AG, D-84088 Neufahrn (DE)
(72) Erfinder: Dr. Thierauf, Axel, 93047 Regensburg (DE)
(74) Vertreter: Lohrentz, Franz, Dipl.-Ing.

(57) **Zusammenfassung**

Ein Verfahren zur Erzeugung einer Selbstreinigungseigenschaft von Oberflächen, insbesondere der Oberflächen von Dachziegeln, bei Beregnung oder Berieselung mit Wasser. Die Oberfläche weist hydrophobe Erhebungen mit einer Höhe von 5 bis 200 µm in verteilter Form auf. Zur Erzeugung dieser Erhebungen wird eine Oberfläche mit einer Dispersion von Pulverpartikeln aus inertem Material in einer Siloxan-Lösung benetzt und das Siloxan anschließend ausgehärtet. Die Pulverpartikel sind vorzugsweise ein keramisches Material.

## Beschreibung

Die Erfindung betrifft ein Verfahren zur Erzeugung einer Selbstreinigungseigenschaft von Oberflächen, insbesondere der Oberflächen von Dachziegeln, bei Beregnung oder Berieselung mit Wasser.

Bei einem bekannten Verfahren dieser Art (WO 96/04123) wird die Selbstreinigungseigenschaft von Oberflächen entweder durch Schaffung entsprechender Oberflächenstrukturen bereits bei der Herstellung der Oberflächen aus hydrophoben Polymeren oder durch Aufkleben eines Pulvers aus hydrophoben Polymeren oder hydrophobierten Materialien auf der Oberfläche erzeugt. Auch eine Silanisierung von Oberflächen mit der erforderlichen Struktur, die zunächst hydrophil sind, wird vorgeschlagen, bei der das Oberflächenmaterial mit reaktiven Gruppen der Silane reagieren kann, sodaß die Oberfläche durch hydrophobe Reste der Silane gebildet ist.

Bei einem vergleichbaren Verfahren , durch das Oberflächen u.a. von Dachziegeln hydrophob gemacht werden sollen, bei dem jedoch eine Selbstreinigungseigenschaft nicht angesprochen ist (US-A 33 54 022), werden durch Aufsprühen einer Paraffinwachslösung oder -dispersion auf einer Oberfläche durch Verflüchtigung des Lösungs- oder Dispergiermittels Wachserhebungen von 5 bis 80 µm Durchmesser und in einem gegenseitigen Abstand von 20 bis 160 µm erzeugt.

Von Keramikkörpern, insbesondere von Dachziegeln oder Ziegeln aus Ton wird in der Regel Atmungsfähigkeit gefordert. Jedoch ist auf deren Oberflächen eine Strukturierung von Polymeroberflächen der beschriebenen Art ohne Beseitigung der geforderten Atmungsfähigkeit praktisch nicht durchführbar. Auch das Aufkleben von Pulverpartikeln mittels eines Klebers führt zu diesem Nachteil, abgesehen davon, daß die Durchführung des Klebevorgangs so, daß die beabsichtigte Oberflächenstruktur erreicht wird, in industriellem Maßstab problematisch ist. Schließlich ist die aus Wachspartikeln gebildete Oberflächenstruktur gegenüber mechanischen Einflüssen wie Reiben und Kratzen, die bei der praktischen Handhabung von z. B. Dachziegeln unvermeidlich sind, sehr empfindlich und daher nicht dauerhaft.

Weiterhin ist auch ein Verfahren zur Hydrophobierung von Oberflächen bekannt, bei dem ein feines Pulver, zum Beispiel aus Tonpartikeln, mittels einer organischen Silikonharzlösung hydrophobiert und anschließend auf der zu hydrophobierenden Oberfläche durch ein aushärtbares organisches Silikonharz fixiert wird (CH-A 268 258). Die Fixierung des feinen Pulvers, um dadurch der zu hydrophobierenden Oberfläche eine gekörnte Struktur zu verleihen, kann auch durch Tauchen der Oberfläche in einer Suspension des hydrophobierten Pulvers in einer derartigen Harzlösung und anschließende Aushärtung des Harzes erfolgen. Auch bei diesem bekannten Verfahren geht es nicht um die Erzeugung einer Selbstreinigungseigenschaft der zu hydrophobierenden Oberfläche.

Aufgabe der Erfindung ist es daher, ein Verfahren vorzuschlagen, mit dem es auf einfache Weise und in industriellem Maßstab möglich ist, die gewünschte Oberflächenstruktur mit Selbstreinigungseigenschaft herzustellen.

Erfindungsgemäß wird dies erreicht durch die Vorgehensweise gemäß dem Patentanspruch 1.

Der Erfindung liegt die Überlegung zugrunde, daß die für das hydrophobe Verhalten erforderlichen Erhebungen bestimmter Größe und gegenseitigen Abstandes nicht notwendig an sich hydrophob sein müssen, sondern durch eine erst bei oder nach ihrer Auftragung durchgeführte Behandlung hydrophobiert sein können. Folglich werden erfindungsgemäß die Erhebungen auf der zu hydrophobierenden Oberfläche mittels einer Dispersion aufgetragen, in der ein Pulver aus inertem Material in einer die Hydrophobierung bewirkenden Siloxan-Lösung dispergiert ist. Inert bedeutet in diesem Zusammenhang, daß das Pulver mit den Siloxanen nicht chemisch reagiert.

Das die Erhebungen erzeugende Pulver ist zweckmäßigerweise ein einfach zu erhaltendes Material, das biologisch und physiologisch unbedenklich und mit der zu behandelnden Oberfläche kompatibel ist. Hierfür eignet sich z.B. bei Dachziegeln ein Pulver aus gemahlener Keramik, z.B. Ton.

Polysiloxane werden üblicherweise zum Hydrophobieren (Imprägnieren) von Dachziegeln und dgl. herangezogen. Es hat sich gezeigt, daß diese Stoffe zugleich geeignet sind, die Partikel des darin dispergierten Pulvers auf der zu hydrophobierenden Oberfläche in der gewünschten Verteilung anzuordnen und mechanisch so zu befestigen, daß die so geschaffene Oberflächenstruktur auch bei rauher Handhabung erhalten bleibt. So können auf die erfindungsgemäße Art behandelte Dachziegel im eingedeckten Zustand begangen werden, ohne daß die Selbstreinigungsfähigkeit beeinträchtigt wird. Die angestrebte Verteilungsdichte (Abstand zwischen den Erhebungen im Bereich von 5 bis 200 µm) der Partikel auf der Oberfläche kann durch die Dispersionsdichte des Pulvers in der Siloxanlösung gesteuert werden, wobei mit zunehmender Dispersionsdichte auch die Verteilungsdichte der Erhebungen auf der Oberfläche gesteigert werden kann. Ein weiteres Kriterium für die Steuerung der Verteilungsdichte ist die Wahl des Kornspektrums des Pulvers. Wird Pulver größerer Teilchengröße eingesetzt oder umfaßt das Teilchengrößenspektrum des eingesetzten Pulvers verhältnismäßig kleine Partikel, zum Beispiel von 10 µm, und zugleich verhältnismäßig große Partikel, von zum Beispiel 150 µm, so werden durch die Fraktion größerer Partikel größere Abstände auf der zu behandelnden Oberfläche geschaffen, das heißt im Bereich größerer Partikel ist die Verteilungsdichte geringer. Folglich läßt sich durch eine relativ eng eingegrenzte Pulverfraktion eine weitgehend homogene Belegung der zu behandelnden Oberfläche erreichen.

So läßt sich durch Auswahl eines bestimmten Korngrößenspektrums, das relativ eng begrenzt ist und vorzugsweise 10 bis 30 µm beträgt, zusätzlich zu der hydrophoben Eigenschaft der Oberfläche eine lipophobe Eigenschaft erzielen. Dies ist deshalb überraschend, weil man im allgemeinen davon ausgegangen ist, daß eine hydrophobe Eigenschaft eine lipophobe Eigenschaft ausschließt, ja geradezu das Synonym für eine lipophile Eigenschaft ist. Die lipophobe Eigenschaft ist von bedeutendem Vorteil, weil dadurch die auch bezüglich fettiger Verunreinigungen vorhandene Selbstreinigungseigenschaft beträchtlich gefördert wird und Verunreinigungen dieser Art durch Ruße oder hochgesättigte Fette/Öle gerade in Industriegegenden ausgeprägt sind.

Die Benetzung der zu hydrophobierenden Oberfläche, z.B. von Dachziegeln, erfolgt zweckmäßigerweise durch Tauchen in der Dispersion. Hierzu werden Dachziegelpakete in ein Becken getaucht, das für die herkömmliche Silikonimprägnierung vorgesehen ist, jedoch die genannte Dispersion enthält. Nach der Herausnahme der Dachziegelpakete werden diese je nach der Art des verwendeten Siloxans in der Dispersion behandelt, um die Aushärtung zu bewirken. Als Siloxane kommen N-octyltriäthoxy-Silan und Kaliummethyl-Silicanat in Betracht. Zur Aushärtung kann entweder eine Gasbehandlung mit CO₂ erfolgen oder es wird ein erneutes Tauchen in flüssige Katalysatoren durchgeführt. Maßnahmen dieser Art sind durch die Verwendung von Siloxanen für die Silikonimprägnierung von Dachziegeln bekannt und hier einsetzbar.

## Patentansprüche

1. Verfahren zur Erzeugung einer Selbstreinigungseigenschaft von Oberflächen, insbesondere der Oberflächen von Dachziegeln, bei Beregnung oder Berieselung mit Wasser, bei dem eine Oberfläche mit einer Dispersion von Pulverpartikeln mit einer Teilchengröße von 5 bis 200 µm aus inertem Material in einer hydrophobierenden Siloxan-Lösung benetzt und das Siloxan ausgehärtet wird.

2. Verfahren nach Anspruch 1,
**dadurch gekennzeichnet**,
daß die Oberfläche in der Dispersion durch Tauchen benetzt wird.

3. Verfahren nach Anspruch 1 oder 2,
**dadurch gekennzeichnet**,
daß als Pulver ein Keramikmaterial verwendet wird.

4. Verfahren nach Anspruch 3,
**dadurch gekennzeichnet**,
daß ein Tonziegelpulver verwendet wird.

5. Verfahren nach einem der Ansprüche 1 bis 4,
**dadurch gekennzeichnet**,
daß die Partikelgröße des Pulvers 10 bis 30 µm beträgt.

6. Verfahren nach einem der Ansprüche 1 bis 5,
**dadurch gekennzeichnet**,
daß Siloxan aus der Gruppe der Heteropolysiloxane verwendet wird.

7. Keramischer Körper, insbesondere Dachziegel, mit selbst reinigender Oberfläche, auf der hydrophobe Erhebungen mit einer Höhe von 5 bis 100 µm verteilt angeordnet sind,
**dadurch gekennzeichnet**,
daß die Erhebungen durch mittels Siloxan fixierte Partikel aus inertem Material gebildet sind.

8. Keramischer Körper nach Anspruch 7,
**dadurch gekennzeichnet**,
daß die Partikel keramische Pulverpartikel, z.B. aus Ton sind.
